# EUROPÄISCHE PATENTSCHRIFT

(11) **EP 3 924 138 B1**
(45) Veröffentlichungstag und Bekanntmachung des Hinweises auf die Patenterteilung: **20.11.2024**
(21) Anmeldenummer: 20700488.8
(22) Anmeldetag: 10.01.2020
(51) Int. Cl.: B23K 26/244, B23K 26/08, B23K 26/28

(54) **VERFAHREN ZUM LASERSCHWEISSEN VON WERKSTÜCKEN**
METHOD OF LASER WELDING WORKPIECES
PROCÉDÉ DE SOUDAGE AU LASER DE PIÈCES

(30) Priorität: 11.02.2019 DE 102019201704
(43) Veröffentlichungstag der Anmeldung: 22.12.2021
(73) Patentinhaber: Robert Bosch GmbH, 70442 Stuttgart (DE)
(72) Erfinder: BORMANN, Axel, 96049 Bamberg (DE)
(86) Internationale Anmeldenummer: PCT/EP2020/050548
(87) Internationale Veröffentlichungsnummer: WO 2020/164823

(56) Entgegenhaltungen:
- EP-A1- 2 700 847
- DE-A1- 102012 109 967
- US-A1- 2014 197 142

## Beschreibung

Die Erfindung betrifft ein Verfahren zum Laserschweißen von Werkstücken, wobei ein Laserstrahl mit seiner Strahlrichtung auf eine Oberfläche im Kontaktbereich der miteinander zu verbindenden Werkstücke während einer Relativbewegung von Laserstrahl im Verhältnis zu den Werkstücken gerichtet wird.

### Stand der Technik

Beim Laserschweißen werden mittels eines von einer Laserquelle emittierten Laserstrahls metallische Werkstücke bzw. Bauteile miteinander verbunden. Dabei wird während des Schweißvorgangs der Laserstrahl relativ zu den miteinander zu verbindenden bzw. verschweißenden Werkstücken bewegt und sukzessive im Verlauf der Relativbewegung eine Schweißnaht entlang einer Schweißlinie ausgebildet. Jedoch schwankt beim Laserschweißen die Einschweißtiefe in der Ausbreitungsrichtung des Laserstrahls und mithin die Festigkeit entlang der Schweißnaht.

Aus der DE 10 2012 109 967 A1 ist bekannt, einen Spritzenkörper-Kanülen-Verbund bereitzustellen, bei welchem die Kanüle und der Spritzenkörper ohne Verwendung eines Klebers auch bei Vorhandensein eines Spaltes zwischen der Kanüle und der innenseitigen Glasfläche des Spritzenkonus verbunden ist. Dazu erfolgt eine Verschweißung mit ultrakurzen Laserpulsen.

### Offenbarung der Erfindung

### Vorteile der Erfindung

Das Verfahren gemäß dem Anspruch 1 hat den Vorteil, dass damit eine gleichmäßige Einschweißtiefe über den Verlauf einer Schweißnaht und mithin eine gleichmäßig hohe Festigkeit erzielbar ist. Dazu ist vorgesehen, dass bei entlang einer ihrer Achsen als Drehachse aneinander gesetzten Werkstücken der Laserstrahl mit seiner Strahlrichtung exzentrisch versetzt zum axialen Zentrum auf die Oberfläche der Werkstücke ausgerichtet wird. Indem der Laserstrahl außermittig versetzt zum axialen Zentrum der Werkstücke auf die Außenoberfläche des Kontaktbereichs bzw. der Verbindungsebene auftrifft bzw. einfällt, bildet nicht das instabile Ende der beim Laserschweißvorgang in Strahlrichtung des Lasers im Werkstoff erzeugten Dampfkapillare den Verlauf der Schweißnahtwurzel, sondern vielmehr ein intermediär zwischen Ursprung und Ende der Dampfkapillare liegender Kapillarabschnitt, welcher deutlich geringeren Längsfluktuationen als das demgegenüber instabilere Ende der Dampfkapillare unterliegt. Dadurch ergibt sich erfindungsgemäß ein praktisch konstanter Verlauf der Schweißnahtwurzel mit entsprechend konstanter Einschweißtiefe. Prozessporen, die im Material während des Laserschweißvorgangs stets am unteren Ende der Dampfkapillare auftreten, liegen beim erfindungsgemäßen Verfahren vorteilhaft außerhalb der Schweißnahtwurzel und somit in unkritischen Bereichen des Materials. Für den Laserbearbeitungsvorgang können die Werkstücke an ihren Längsachsen oder an ihren Querachsen miteinander verbunden werden; es ist jedoch auch denkbar, dass eines der Werkstücke mit seiner Längsachse an eine Querachse des anderen Werkstücks gesetzt wird, wobei eine dieser Achsen als Drehachse dient.

Gemäß der Ausführungsform der Erfindung, die relativ einfach zu realisieren ist, werden die Werkstücke während der Einstrahlung des Laserstrahls um ihre Drehachse gedreht, während die den Laserstrahl emittierende Laserquelle ortsfest bleibt.

Dabei wird bei den rohrförmig ausgebildeten Werkstücken als Drehachse die Längsachse der Werkstücke gewählt.

Indem die Versetzung bezüglich des axialen Zentrums größer als der Innenradius der Werkstücke bemessen wird, bildet die vom Laserstrahl in dessen Strahlrichtung definierte Gerade eine Passante bezüglich des - im Querschnitt der Werkstücke gesehenen - Innenkreises, wenn die Versetzung des Strahlverlaufs größer als der Innenkreisradius dimensioniert wird, was zur Folge hat, dass die Länge der sich beim Laserschweißvorgang ausbildenden Dampfkapillare signifikant größer werden kann als die - im Querschnitt gesehene - radiale Ringdicke der Werkstücke, so dass die Einschweißtiefe und mithin der Verlauf der Schweißnahtwurzel nicht durch das Ende der Dampfkapillare, sondern vielmehr durch einen intermediär zwischen Ursprung und Ende der Dampfkapillare liegenden Kapillarabschnitt bestimmt wird, welcher einen kürzeren Abstand zur Innenumfangsfläche der Werkstücke aufweist als das Ende der Dampfkapillare. Im Gegensatz zum herkömmlichen Verfahren, bei dem der Laserstrahl radial einfällt, wird durch das erfindungsgemäße Verfahren eine Verunreinigung des Innenraums der Werkstücke durch während des Laserschweißens an der Dampfkapillare entstehende Spitzer weitgehend vermieden.

Ferner wird die Versetzung des Laserstrahls kleiner als der Außenradius der Werkstücke bemessen, damit der Laserstrahl tief in das Material der Werkstücke eindringen kann.

Weitere vorteilhafte Weiterbildungen und Ausgestaltungen der Erfindung ergeben sich durch die in den Unteransprüchen aufgeführten Maßnahmen.

Um eine ringförmig umlaufende Schweißnaht auszubilden, sieht eine Ausgestaltung der Erfindung vor, dass während der Einstrahlung des Laserstrahls zumindest eine ganze Umdrehung der Werkstücke um ihre Drehachse erfolgt.

Eine vorteilhafte Ausgestaltung der Erfindung kann darin bestehen, dass als den Laserstrahl emittierende Laserquelle ein Faserlaser mit einer Emissionswellenlänge λ von etwa 1070 nm verwendet wird, mit dessen inhärent hoher Strahlqualität eine präzise verlaufende Schweißnaht erzielbar ist.

### Kurze Beschreibung der Zeichnungen

Ausführungsbeispiele der Erfindung sind in der nachfolgenden Beschreibung und in den beigefügten Zeichnungen näher erläutert. Letztere zeigen in schematisch gehaltenen Ansichten:

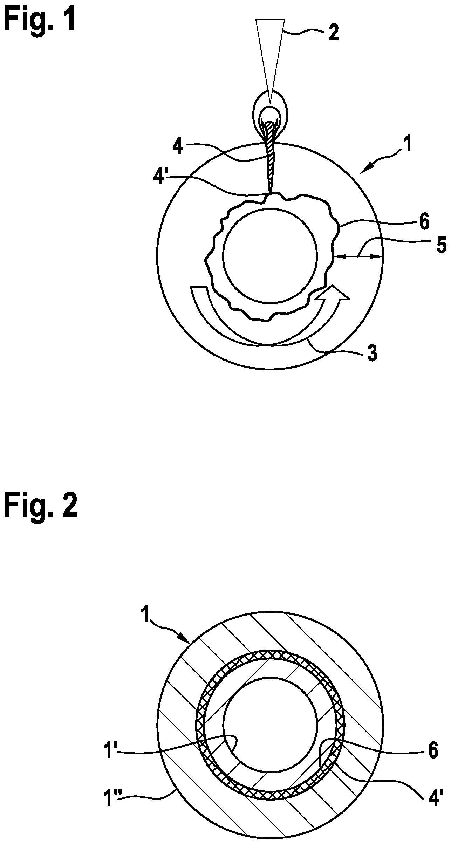

Fig. 1 eine Querschnittansicht einer herkömmlichen Anordnung aus einem Laser und zwei axial zueinander angeordneten rohrförmigen Werkstücken entlang der Verbindungsebene der Werkstücke, wobei ein zum Laserschweißen dienender Laserstrahl des Lasers in radialer Richtung auf die Oberfläche der Verbindungsebene einstrahlt und sich die beiden Werkstücke während der Einstrahlung um ihre gemeinsame Symmetrieachse drehen,
Fig. 2 eine schematische Querschnittansicht der Anordnung von Fig. 1 entlang der Verbindungsebene von zwei axial zueinander angeordneten rohrförmigen Werkstücken, welche gemäß dem herkömmlichen Laserschweißverfahren verbunden sind, wobei das fluktuierende Ende der beim Laserschweißvorgang erzeugten Dampfkapillare die Nahtwurzel bzw. den Nahtgrund der Schweißlinie ausbildet,

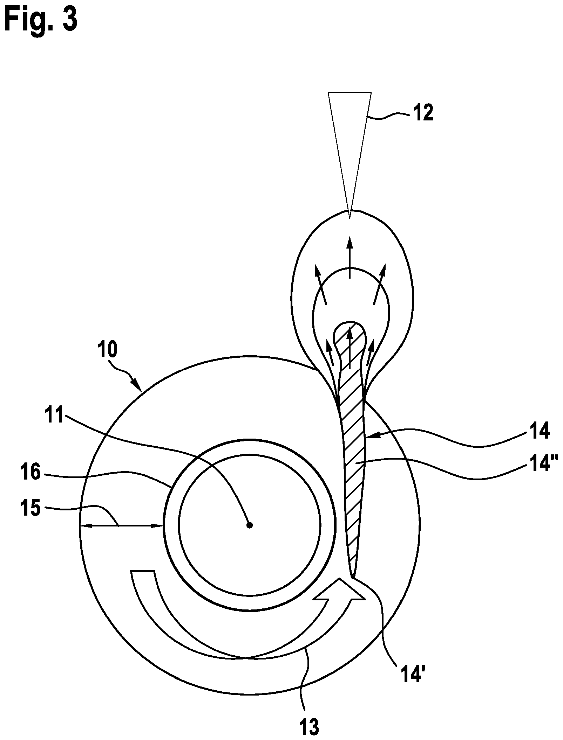

Fig. 3 eine Querschnittansicht einer erfindungsgemäßen Anordnung aus einem Laser und zwei axial zueinander angeordneten rohrförmigen Werkstücken entlang der Verbindungsebene der zwei Werkstücke mit einem zum Laserschweißen dienenden Laserstrahl, der erfindungsgemäß mit seiner optischen Strahlrichtung exzentrisch bezüglich des axialen Zentrums der Werkstücke positioniert ist, wobei sich die beiden Werkstücke gemeinsam um ihre Symmetrieachse drehen,

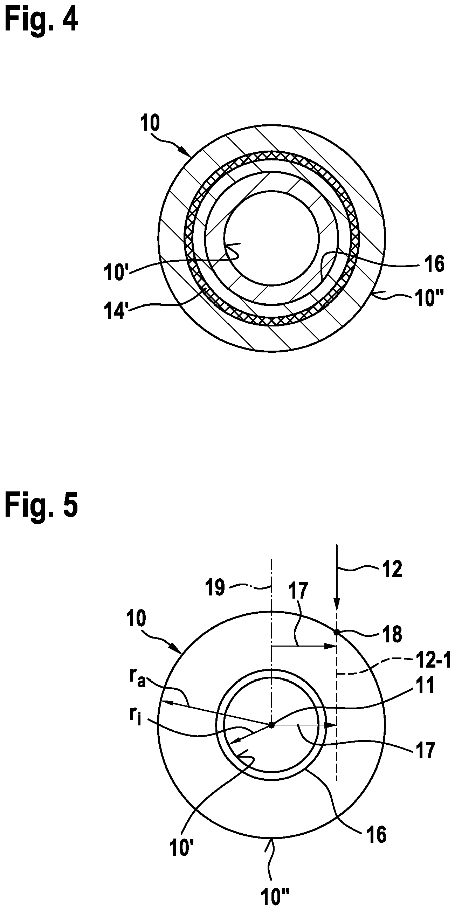

Fig. 4 eine schematisch gehaltene Querschnittansicht der erfindungsgemäßen Anordnung von Fig. 3 entlang der Verbindungsebene der zwei Werkstücke, welche gemäß dem erfindungsgemäßen Laserschweißverfahren miteinander verschweißt werden, wobei ein intermediär zwischen dem Ursprung und dem fluktuierenden Ende der beim Laserschweißvorgang erzeugten Dampfkapillare liegender Kapillarabschnitt den Verlauf der Schweißnahtwurzel der Schweißlinie bestimmt, und
Fig. 5 eine schematisch gehaltene Querschnittdarstellung der erfindungsgemäßen Anordnung von Fig. 3, wobei die exzentrische Ausrichtung des Laserstrahls bezüglich des axialen Zentrums der Werkstücke skizzenhaft illustriert ist.

### Ausführungsformen der Erfindung

Bevor anhand von Fig. 3 und 4 die wesentlichen Eigenschaften bzw. Merkmale des erfindungsgemäßen Laserschweißverfahrens erläutert werden, sollen zunächst anhand von Fig. 1 und 2 die Merkmale des herkömmlichen Laserschweißverfahrens erläutert werden.

Fig. 1 zeigt eine herkömmliche Anordnung von zwei miteinander zu einem Bauteil 1 zu verschweißenden rohrförmigen Werkstücken gemäß einer Querschnittansicht entlang der Verbindungs- bzw. Schweißebene während des herkömmlichen Laserschweißens, wobei ein Laserstrahl 2 in radialer Richtung auf die Außenoberfläche des Werkstücks 1 in Höhe der Schweißebene einstrahlt und sich währenddessen das Werkstück 1 um seine axiale Symmetrieachse gemäß der anhand eines Pfeils 3 dargestellten Drehrichtung dreht. Dabei schmilzt das jeweils im Einwirkungsbereichs des Laserstrahls befindliche Material an der Außenoberfläche aufgrund der Absorption von Laserstrahlung. Die sich während des Einstrahlvorgangs in der Schmelze 8 ausbildende Dampfkapillare 4 (auch als "Keyhole" bezeichnet), welche der Relativbewegung des Laserstrahls 2 folgt, ist in ihrer Längserstreckung durch die aus der Differenz von Außenradius und Innenradius festgelegte Ringdicke des Werkstücks 1 begrenzt, wobei das - dem Strahlauftreffpunkt abgewandte - Ende 4' der Dampfkapillare 4 die Einschweißtiefe 5 bestimmt. Die Einschweißtiefe 5 wird durch das fluktuierende Ende 4' der Dampfkapillare 4 bestimmt, so dass sich ein stochastisch fluktuierender Verlauf der Schweißnahtwurzel 6 innerhalb des Werkstücks 1 ergibt. Wie in Fig. 2 rein schematisch dargestellt ist, bildet das fluktuierende Ende 4' der Dampfkapillare 4 die Schweißnahtwurzel bzw. den Schweißnahtgrund 6 der Schweißlinie; mithin fallen der Schweißnahtgrund 6 der Schweißlinie und das Ende 4' der Dampfkapillare 4 zusammen.

Fig. 3 bis 5 veranschaulichen das erfindungsgemäße Laserschweißverfahren anhand von Querschnittansichten einer erfindungsgemäßen Anordnung aus einem Laser und zwei miteinander zu einem Bauteil 10 zu verschweißenden rohrförmigen Werkstücken entlang der Verbindungs- bzw. Schweißebene der zwei Werkstücke, wobei der Laser einen Laserstrahl bzw. ein Laserstrahlenbündel 12 emittiert, der/das außermittig auf die Außenoberfläche des Werkstücks 10 in Höhe der Verbindungsebene einfällt, während sich die Werkstücke 10 gemeinsam um ihre - konzentrisch zum Mittelpunkt 11 verlaufende - axiale Symmetrieachse, d.h. um ihre Längsachse, gemäß der anhand des Pfeils 13 dargestellten Drehrichtung drehen, wobei das jeweils im Einwirkungsbereich des Laserstrahls 12 befindliche Material an der Außenoberfläche aufgrund der Absorption von Laserstrahlung schmilzt und sich in der Schmelze eine Dampfkapillare 14 ausbildet.

Die Ausbreitungsrichtung bzw. Strahlrichtung des Laserstrahls 12 ist derart bezüglich des Werkstücks 10 ausgerichtet, dass der Laserstrahl 11 exzentrisch, d.h. versetzt gegenüber dem Mittelpunkt 11 der Werkstücke 10 auf die Außenumfangsoberfläche 10" der Werkstücke 10 einstrahlt bzw. auftrifft, wobei die mit Bezugsziffer 17 bezeichnete Versetzung Δ des Strahlauftreffpunkts 18 (Fig. 5) größer bemessen ist als der durch die Innenumfangsfläche 10' festgelegte Innenradius rᵢ der Werkstücke 10 und kleiner bemessen ist als deren durch die Außenumfangsfläche 10" definierter Außenradius rₐ, so dass die Ungleichung rᵢ < Δ < rₐ gilt. Somit bildet die vom Laserstrahl 12 definierte Gerade eine Sekante, welche den - im Querschnitt gesehenen - Außenkreis der hohlzylindrischen Werkstücke 10 in Höhe der Verbindungsebene schneidet, jedoch eine Passante bezüglich des Innenkreises bildet, also eine Gerade 12-1, die außerhalb der Innenumfangsfläche 10' verläuft, ohne diese zu schneiden, wie insbesondere in Fig. 5 illustriert ist. Dadurch ist die Länge der Dampfkapillare 14 deutlich größer als die radiale Ringdicke d = rₐ - rᵢ. Da dabei die Dampfkapillare 14 dem Laserstrahl 12 während der Relativbewegung folgt, wird die Schweißnahtwurzel 16 nicht durch das in Längserstreckungsrichtung der Dampfkapillare 14 fluktuierende Ende 14', sondern durch einen sich stabil ausbildenden mittleren Abschnitt 14" der Dampfkapillare 14 bestimmt, welcher der Innenumfangsfläche 10" bzw. Innenbegrenzung des Werkstücks 10 angrenzend zugewandt ist und in radialer Richtung einen kürzeren Abstand zur Innenumfangsfläche 10' im Vergleich zum Ende 14' der Dampfkapillare 14 aufweist.

Wie in Fig. 4 rein schematisch dargestellt ist, sind das fluktuierende Ende 14' der Dampfkapillare 14 und die Schweißnahtwurzel bzw. der Schweißnahtgrund 16 der Schweißlinie in radialer Richtung voneinander beabstandet, da - im Unterschied zum herkömmlichen Laserschweißverfahren (gemäß Fig. 2) - nicht das in Längserstreckungsrichtung instabile Ende 14', sondern der mittlere Abschnitt 14" der Dampfkapillare 14 den Schweißnahtgrund bzw. die Schweißnahtwurzel 16 ausbildet. Mithin wird auch die Einschweißtiefe 15 durch den mittleren Abschnitt 14" der Dampfkapillare 14 bestimmt.

In Fig. 5 ist aus Gründen der Übersichtlichkeit die exzentrisch versetzte Ausrichtung des Laserstrahls 12 bezüglich des axialen Zentrums 11 der Werkstücke 10 dargestellt, wobei der axiale Mittelpunkt 11 die Drehachse der Werkstücke 10 während des Laserschweißvorgangs bildet. Dabei handelt es sich um eine parallele Versetzung 17 des Laserstrahls 12 gegenüber einer Geraden 19, die radial durch das axiale Zentrum bzw. den Mittelpunkt 11 durchgeht. Dadurch legt der parallel versetzte Laserstrahl 12 eine Absorptionswegstrecke im Material der Werkstücke 10 zurück, welche deutlich länger als die radiale Ringdicke d = rₐ - - rᵢ ist.

Im bevorzugten Ausführungsbeispiel wird als Laserquelle für den Laserstrahl 12 ein Faserlaser aufgrund seiner hohen Strahlqualität eingesetzt, wobei der Faserlaser bei einer typischen Emissionswellenlänge von etwa 1070 nm betrieben wird. Die während des Laserschweißvorgangs abgestrahlte Leistung P des Faserlasers liegt dabei in einem Bereich P > 280 Watt und ist abhängig von der Größe der miteinander zu verbindenden Werkstücke und/oder deren Absorptionsvermögen. Ferner erfolgen während der Einstrahlung des Laserstrahls 12, d.h. für die Dauer des Laserschweißvorgangs, im Ausführungsbeispiel ungefähr anderthalb Umdrehungen der Werkstücke 10 um ihre gemeinsame Symmetrieachse bzw. Drehachse, um eine ringförmig umlaufende Schweißnaht auszubilden. Die Mindestgeschwindigkeit beträgt v > 3 m / min an der Oberfläche.

Zusammenfassend ist beim erfindungsgemäßen Verfahren vorgesehen, dass der Laserstrahl 12 exzentrisch versetzt zum axialen Zentrum 11 der rohrförmig ausgebildeten Werkstücke 10 verläuft, wobei die Versetzung 17 des Laserstrahls 12 gegenüber dem axialen Zentrum 11 derart dimensioniert ist, dass die Ungleichung rᵢ < Δ < rₐ erfüllt wird, wobei mit rᵢ der Innenradius der Werkstücke, mit rₐ deren Außenradius und mit Δ die Versetzung bezeichnet sind. Dadurch wird der Verlauf der auszubildenden Schweißnahtwurzel nicht durch das stochastisch fluktuierende Ende 14' der Dampfkapillare 14, sondern vielmehr durch einen sich stabil ausbildenden mittleren Abschnitt 14" der Dampfkapillare 14 bestimmt, so dass der Verlauf der Schweißnahtwurzel kaum stochastischen Schwankungen unterliegt. Mithin liegen beim erfindungsgemäßen Verfahren Prozessporen vorteilhaft außerhalb des Verlaufs der Schweißnahtwurzel, denn die im Material der Werkstücke 10 während des Laserschweißvorgangs nahezu unvermeidlich auftretenden Prozessporen entstehen stets am unteren Ende 14' der Dampfkapillare 14.

## Patentansprüche

1. Verfahren zum Laserschweißen von zwei axial zueinander angeordneten rohrförmigen Werkstücken, wobei ein Laserstrahl mit seiner Strahlrichtung auf eine Außenumfangsoberfläche (10") des Kontaktbereichs bzw. der Verbindungsebene der miteinander zu verbindenden Werkstücke während einer Relativbewegung von Laserstrahl im Verhältnis zu den Werkstücken gerichtet wird, wobei bei entlang ihrer Längsachse als Drehachse aneinander gesetzten Werkstücken (10) der Laserstrahl (12) mit seiner Strahlrichtung exzentrisch versetzt zum axialen Zentrum (11) der Werkstücke (10) auf die Außenumfangsoberfläche (10") ausgerichtet wird, wobei die Werkstücke (10) während der Einstrahlung des Laserstrahls (12) um ihre Drehachse gedreht werden, wobei die Versetzung (17) bezüglich des axialen Zentrums (11) größer als der Innenradius der Werkstücke (10) bemessen wird und wobei die Versetzung (17) des Laserstrahls (12) kleiner als der Außenradius der Werkstücke (10) bemessen wird, wobei der Laserstrahl eingerichtet ist das jeweils im Einwirkungsbereich des Laserstrahls (12) befindliche Material an der Außenoberfläche der Werkstücke (10) aufgrund der Absorption von Laserstrahlung schmilzt und sich in der Schmelze eine Dampfkapillare (14) ausbildet, dass die Länge der Dampfkapillare (14) deutlich größer als die Differenz zwischen Außenradius und Innenradius der Werkstücke (10) ausgebildet wird und dass die Dampfkapillare (14) dem Laserstrahl (12) während der Relativbewegung folgt, so dass eine Schweißnahtwurzel (16) nicht durch das in Längserstreckungsrichtung der Dampfkapillare (14) fluktuierende Ende (14'), sondern durch einen sich stabil ausbildenden mittleren Abschnitt (14") der Dampfkapillare (14) bestimmt wird, welcher einer Innenumfangsfläche (10') der Werkstücke (10) angrenzend zugewandt ist und in radialer Richtung einen kürzeren Abstand zur Innenumfangsfläche (10') im Vergleich zum Ende (14') der Dampfkapillare (14) aufweist.

2. Verfahren nach Anspruch 1, **dadurch gekennzeichnet, dass** während der Einstrahlung des Laserstrahls (12) zumindest eine ganze Umdrehung der Werkstücke (10) um ihre Drehachse erfolgt.

3. Verfahren nach einem der Ansprüche 1 bis 2, **dadurch gekennzeichnet, dass** als den Laserstrahl (12) emittierende Laserquelle ein Faserlaser mit einer Emissionswellenlänge λ von etwa 1070 nm verwendet wird.

## Claims

1. Method for laser welding two tubular workpieces situated axially in relation to one another, wherein, in the course of a relative movement of a laser beam in relation to the workpieces, the laser beam is aligned with its beam direction towards an outer circumferential surface (10") of the contact region, or the connection plane, of the two workpieces to be interconnected, wherein, when the workpieces (10) have been placed against one another along their longitudinal axis as axis of rotation, the laser beam (12) is aligned towards the outer circumferential surface (10") with its beam direction eccentrically offset from the axial centre (11) of the workpieces (10), wherein, during the irradiation by the laser beam (12), the workpieces (10) are rotated about their axis of rotation, wherein the offset (17) from the axial centre (11) is larger than the inner radius of the workpieces (10) and wherein the offset (17) of the laser beam (12) is smaller than the outer radius of the workpieces (10), wherein the laser beam is configured such that material, located in each case in the region where the laser beam (12) acts, on the outer surface of the workpieces (10) melts owing to the absorption of laser radiation and a vapour capillary (14) forms in the melt, that the length of the vapour capillary (14) is considerably greater than the difference between the outer radius and the inner radius of the workpieces (10) and that the vapour capillary (14) follows the laser beam (12) during the relative movement, with the result that a weld seam root (16) is defined not by the end (14') that fluctuates in the direction of longitudinal extent of the vapour capillary (14) but by a stable central portion (14") of the vapour capillary (14), which stable central portion is next to an inner circumferential surface (10') of the workpieces (10) and is at a shorter radial distance from the inner circumferential surface (10') than from the end (14') of the vapour capillary (14).

2. Method according to Claim 1, **characterized in that**, during the irradiation by the laser beam (12), the workpieces (10) perform at least one full revolution about their axis of rotation.

3. Method according to either of Claims 1 and 2, **characterized in that** a fibre laser with an emission wavelength λ of approximately 1070 nm is used as laser source emitting the laser beam (12).

## Revendications

1. Procédé de soudage au laser de deux pièces tubulaires agencées axialement l'une par rapport à l'autre, un faisceau laser étant dirigé avec sa direction de faisceau sur une surface périphérique extérieure (10") de la zone de contact ou du plan de liaison des pièces à relier l'une à l'autre pendant un mouvement relatif du faisceau laser par rapport aux pièces ; lorsque les pièces (10) sont placées l'une contre l'autre le long de leur axe longitudinal en tant qu'axe de rotation, le faisceau laser (12) étant orienté sur la surface périphérique extérieure (10") avec sa direction de faisceau décalée de manière excentrée par rapport au centre axial (11) des pièces (10), les pièces (10) étant tournées autour de leur axe de rotation pendant l'irradiation du faisceau laser (12), le décalage (17) par rapport au centre axial (11) étant supérieur au rayon intérieur des pièces (10) et le décalage (17) du faisceau laser (12) étant inférieur au rayon extérieur des pièces (10), le faisceau laser étant adapté pour faire fondre le matériau se trouvant dans la zone d'action du faisceau laser (12) sur la surface extérieure des pièces (10) en raison de l'absorption du rayonnement laser et pour former un capillaire de vapeur (14) dans la masse fondue, la longueur du capillaire de vapeur (14) étant nettement supérieure à la différence entre le rayon extérieur et le rayon intérieur des pièces (10), et le capillaire de vapeur (14) suivant le faisceau laser (12) pendant le mouvement relatif, de telle sorte qu'une racine de soudure (16) n'est pas déterminée par l'extrémité (14') fluctuant dans la direction d'extension longitudinale du capillaire de vapeur (14), mais par une section centrale (14'') du capillaire de vapeur (14) se formant de manière stable, qui est tournée de manière adjacente vers une surface périphérique intérieure (10'') des pièces (10) et présente dans la direction radiale une distance plus courte par rapport à la surface périphérique intérieure (10'') en comparaison de l'extrémité (14') du capillaire de vapeur (14).

2. Procédé selon la revendication 1, **caractérisé en ce que**, pendant l'irradiation du faisceau laser (12), au moins une rotation complète des pièces (10) est effectuée autour de leur axe de rotation.

3. Procédé selon l'une quelconque des revendications 1 à 2, **caractérisé en ce qu'**on utilise en tant que source laser émettant le faisceau laser (12) un laser à fibre ayant une longueur d'onde d'émission λ d'environ 1 070 nm.
